Europäisches Patentamt

European Patent Office

Office européen des brevets

(19)

(11) Publication number: **0 193 177**
**A2**

(12) # EUROPEAN PATENT APPLICATION

(21) Application number: **86102468.5**

(22) Date of filing: **26.02.86**

(51) Int. Cl.⁴: **G 06 F 3/023**

(30) Priority: **26.02.85 JP 27716/85 U**

(43) Date of publication of application:
**03.09.86 Bulletin 86/36**

(84) Designated Contracting States:
**AT BE CH DE FR GB IT LI LU NL SE**

(71) Applicant: **OMRON TATEISI ELECTRONICS CO.**
**10, Tsuchido-cho Hanazono Ukyo-ku**
**Kyoto 616(JP)**

(72) Inventor: **Yamashita, Terufumi**
**Omron Tateisi Electronics Co. 20, Igadera**
**Shimo-Kaiinji Nagaokakyo-shi Kyoto(JP)**

(74) Representative: **WILHELMS, KILIAN & PARTNER**
**Patentanwälte**
**Eduard-Schmid-Strasse 2**
**D-8000 München 90(DE)**

(54) A touch input device.

(57) A touch input device comprising a touch pad, detecting member for detecting a coordinates data corresponding to the position of the touch pad being touched, converting member for converting the detected coordinates data to a character code, and designating member for selectively designating either the coordinates data or character code.

EP 0 193 177 A2

WILHELMS KILIAN & PARTNER

**0193177**

OMRON TATEISI ELECTRONCIS CO.

Kyoto / Japan

DR. RER. NAT. ROLF E. WILHELMS
DR. RER. NAT. HELMUT KILIAN
DIPL. EN SCHMIDT-BOGATZKY

---

## A TOUCH INPUT DEVICE

EDUARD SCHMID STRASSE 2
8000 MÜNCHEN 90

Priority: February 26, 1985-Japan-No. 27716/1985 (UM)

TELEFON (089) 652091
TELEX 523467 (WFE D)
TELEGRAMME PATRANS MÜNCHEN
TELEFAX G3 G2 (089) 652091

P 2963-EP

## BRIEF SUMMARY OF THE INVENTION

This invention relates to a touch input device having a touch pad, and more particularly to an improved touch input device adapted to detect a coordinates data corresponding to the position of the touch pad touched by a stylus or finger.

Heretofore, a touch input device has been primarily utilized to input analog data such as figures into a display of a central processing unit ( CPU ). The conventional touch input device designed to input such analog data cannot input digital data i.e.alphanumeric codes. In case such digital data is input, a key pad is required in addition to the touch input device. However, if the key pad is provided, there is caused a problem that the size of a key board including the touch input device and key pad necessarily expands due to the added space of the key pad.

It is, therefore, a primary object of this invention to provide a touch input device capable of inputting not only analog data but digital data by switching an input Mode.

According to one aspect of this invention, there is provided a touch input device comprising a touch pad, means for detecting a coordinates data corresponding to the position of the touch pad to be touched, means for converting the coordinates data into a character code, and means for selectively designating either the coordinates data or the character code as an output data.

Other objects and numerous advantages of the touch input device according to this invention will become apparent from the following description taken in conjunction with the accompanying drawings.

## BRIEF DESCRIPTION OF DRAWINGS

Fig. 1 is a view illustrating a touch input device built in a key board for use with a CRT display as a preferred embodiment of this invention,

Fig. 2 is a plan view of a surface sheet of the touch input device of Fig. 1,

Fig. 3 is an exploded perspective view of the touch input device of Fig. 1,

Fig. 4 is a sectional view of Fig. 3,

Fig. 5 is a circuit diagram of the touch input device of Fig. 1, and

Fig. 6 is a flow chart illustrating the general operation of the touch input device of Fig. 1.

## DETAILED DESCRIPTION OF THE INVENTION

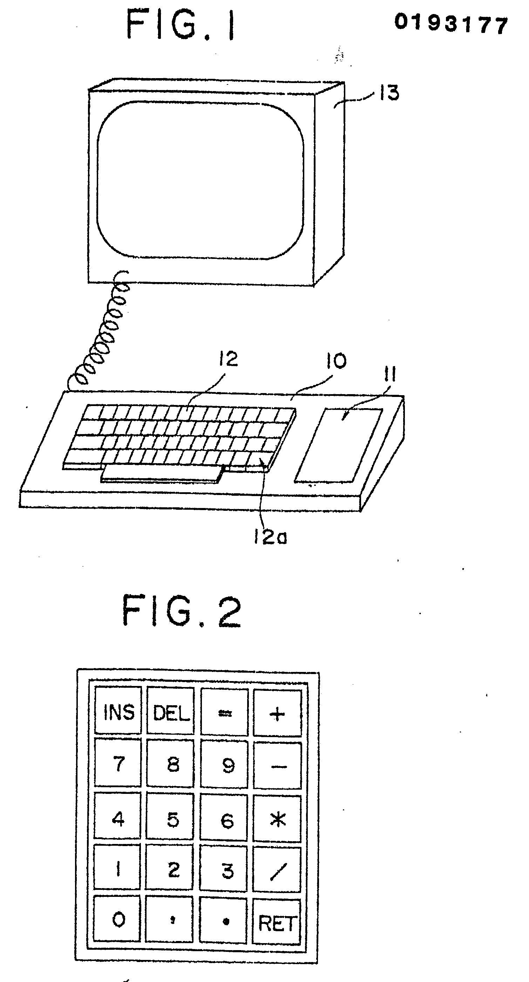

Referring to Fig. 1, a touch input device 11 is built in a keyboard 10 provided with a plurality of keys 12. The keyboard is connected to a CRT display unit 13 on which various figures and character codes are displayed according to the input operation from the keyboard 12. A key 12a is provided for switching an input Mode into either analog data input Mode or digital data input Mode.

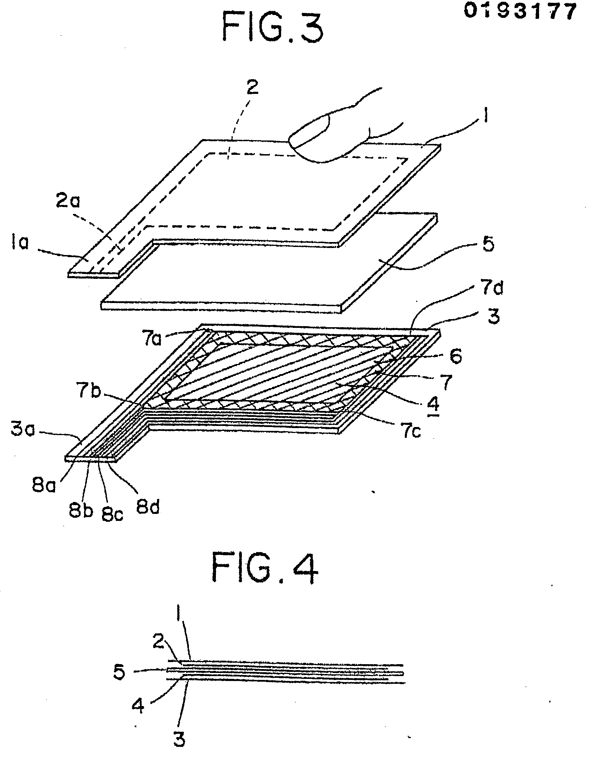

As shown in Figs. 3 and 4, the touch input device 11 comprises conductor 2 printed on the under surface of an outside sheet 1, pressure sensitive conductor 5, and resistance 4 printed over an inside sheet 3. The outside sheet 1 is made of polyethylene terephthalate ( PET ) film the thickness of which is approximately 100 micron. The printed conductor 2 is made of semirectangular silver pattern whose lead pattern 2a is printed on a connector portion 1a. The outer surface of outside sheet 1 is printed to display alphanumeric characters ( Fig. 2 ). Such characters may be also printed on the inside sheet 3 instead of outside sheet 1.

The pressure sensitive conductor 5 is made of semirectangular anisotrophic pressure sensitive conductive rubber sheet which will serve as a conductor when a force is applied in its thickness direction.

The inside sheet 3 is also made of 100 micron thick PET film which has semirectangular resistance 4 printed on the surface firmly contacting with the conductor 5. The resistance 4 comprises central portion 6 which is made of carbon pattern having uniform resistance value, and marginal electrode portion 7 which is also made of carbon pattern having a constant width and uniform resistance value thereon. Moreover, the sheet 3 has a connector portion 3a on which lead patterns 8a,8b,8c, and 8d extend from the respective corners 7a,7b,7c, and 7d of the marginal electrode portion 7.

The central portion 6 has a resistance value of several kiloohms/square while the marginal electrode portion 7 has a resistance value of tens of ohms/square. The lead patterns 8a through 8d have an insulating material ( not shown ) provided thereon.

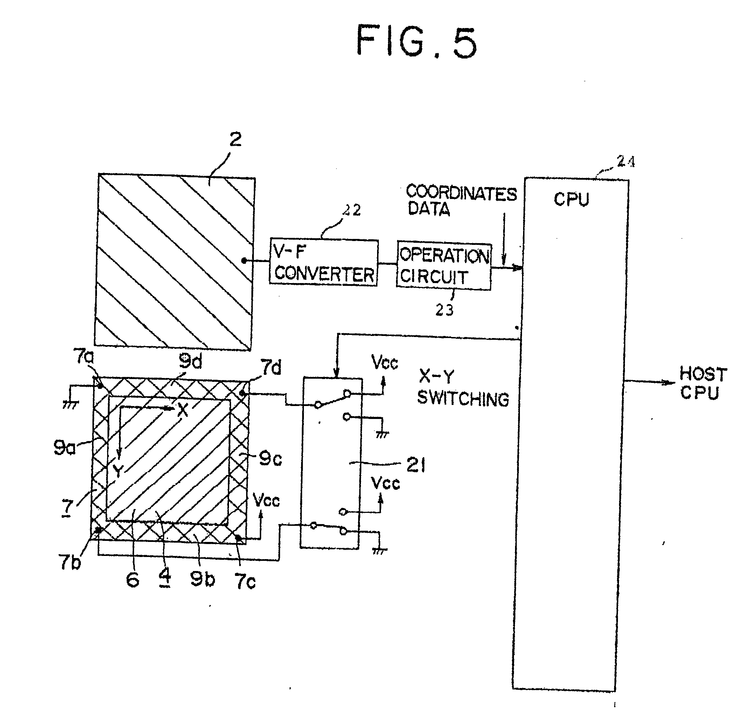

Referring to Fig. 5, conductor 2 is connected through a flexible printed circuit board ( not shown ) to a converter 22 and operation circuit 23. The V-F converter 22 provides pulses whose frequency is proportional to an input voltage. The operation circuit 23 counts the pulses output from the converter 22 for a given time and provides a CPU 24 with the counted value as a coordinates data. The CPU performs an operation which will be described hereinafter.

The corner portions 7a and 7b of marginal electrode portion 7 are connected through a flexible printed circuit board ( not shown ) to ground, an analog switch 21 respectively. Similarly, the corner portions 7c and 7d are connected to a power source Vcc and the analog switch 21 respectively as shown in Fig. 5. The analog switch 21 alternately connects the corner portion 7b and 7d either to the power source Vcc or ground.

3

Now, the operation of this circuit will be desribed. In Fig.5, the corner portions 7a and 7c are respectively connected to ground and Vcc, while the corner portions 7b and 7d are respectively connected to ground and Vcc through the analog switch 21. Thus, the side 9a between the corner portions 7a and 7b of marginal electrode portion 7 has a voltage close to ground, while the side 9c between the corner portions 7c and 7d has a voltage close to power source Vcc. Accordingly, the central portion 6 has a potential gradient from the side 9a to side 9c. In addition, the side 9d between the corner portion 7a and 7d, and side 9b between the corner portion 7b and 7c have potential gradients from ground to Vcc respectively, thereby correcting the distortion of the potential gradient in the marginal portion of the central portion 6.

Under the above conditions, when any position of the sheet 1 is depressed with a finger, the pressure sensitive conductor 5 establishes a conductive path on the position being depressed and the potential at the depressed position is input through conductor 2 to V-F converter 22 which outputs to operation circuit 23 pulses whose frequency is proportional to the potential. The operation circuit 23 as previously described, counts the input pulses for a given time and provides a CPU 24 with the counted value as an abscissa data.

Upon receipt of X-Y switching signal from CPU 24, analog switch 21 will operate so that the corner portions 7b and 7d are respectively connected to Vcc and ground. As a result, the side 9d between the corner portions 7a and 7d has a value close to ground, while the side 9b between the corner portions 7b and 7c has a value close to Vcc. Accordingly, the central portion 6 has a potential gradient from the side 9d to side 9b. In addition, the side 9a between the corner portions 7a and 7b and the side 9c between the corner portions 7d and 7c have potential gradients from ground to Vcc, thereby correcting the distortion of the potential gradient in the marginal portion of central portion 6.

4

When the potential of the depressed position is input through conductor 2 to V-F converter 22, the converter 22 outputs pulses whose frequency is proportional to the potential. The operation circuit 23 counts the pulses output from converter 22 for a given time and provides CPU 24 with the counted value as an ordinate data.

In this way, an abscissa data and ordinate data can be alternately detected by changing the direction of a potential gradient to be established using an analog switch which is operated by X-Y switching signal. The switching period is so short that the delay of detection timing is negligible. Consequently, the abscissa and ordinate data of the position being depressed can be almost simultaneously detected.

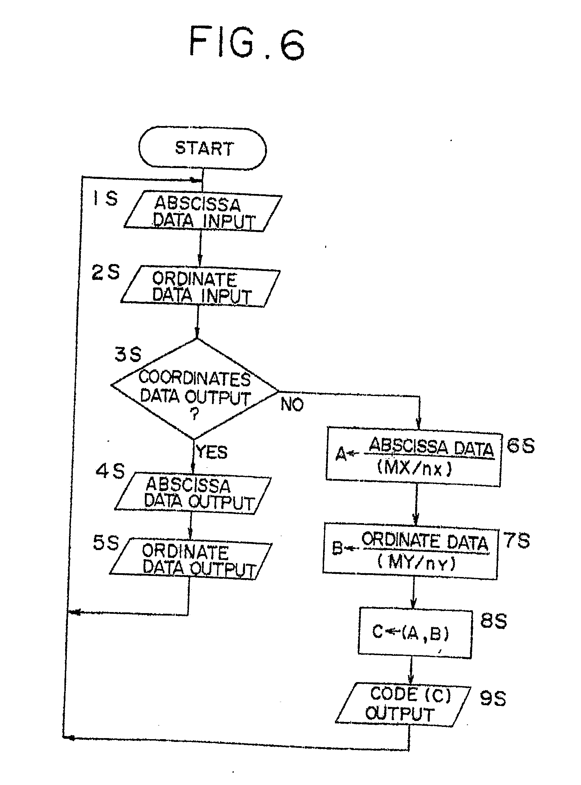

The operation procedures of CPU 24 will be described referring to Fig. 6. In steps 1S and 2S, an abscissa and ordinate data are input by touching any position of touch pad 11, corresponding to the position being touched. Then, it is inquired whether analog data is to be output, that is, coordinate data is to be output in step 3S. If an analog data input Mode has been set by key 12a, a sequence flows to steps 4S and 5S in which the abscissa and ordinate data are output to a host computer ( not shown ) which is located in CRT display unit 13 for displaying an analog data on the basis of the coordinates data.

If a digital input Mode has been set, a sequence flows to steps 6S and 7S, wherein a row data A and line data B are calculated based on the abscissa and ordinate data. MX and nx represent the maximum abscissa data and the maximum row number of characters respectively ( step 6S ). Similarly, MY and ny represent the maximum ordinate data and the maximum line number of characters respectively. Referring to a table ( not shown ) which defines the relationship between the row and line data, and character codes, a character code C is located ( step 8S ) and output to host computer 24( step 9S ) which displays a character based on the character code C on display unit 13.

5

In the above embodiment, characters are printed on the surface of the outside sheet 1. However, when inputting analog data in an analog input Mode, such characters may be an obstacle to the smooth operation of touch input device. In this reason, the touch input device may be designed to allow such characters to appear only when a digital input Mode is selected by key 12a. This function can be performed by using liquid crystal display or light-emitting diodes.

In Fig. 5, A-D converter can be employed instead of V-F converter to detect coordinates data.

Moreover, pressure sensitive conductor 5 may be printed over either conductor 2 or resistance 4. And outside sheet 1 and inside sheet 3 may be integrally formed so that when folded, they confront each other.

6

What is claimed is:

1. A touch input device comprising:
a touch pad,
means for detecting a coordinates data corresponding to the position of said touch pad being touched,
means for converting said detected coordinates data to a character code, and
means for selectively designating either said coordinates data or said character code as an output data.

2. A touch input device according to claim 1, wherein said converting means is table means storing said character code corresponding to said coordinates data.

3. A touch input device according to claim 1, wherein said touch pad is adapted to display thereon a character corresponding to said character code.

4. A touch input device according to claim 3, further comprising means for allowing said character to be displayed on said touch pad only when said character code being designated as an output data.

7

# FIG. 1

# FIG. 2

# FIG.3

# FIG.4

# FIG.5

# FIG.6